# EUROPÄISCHE PATENTSCHRIFT

(11) **EP 3 073 016 B1**
(45) Veröffentlichungstag und Bekanntmachung des Hinweises auf die Patenterteilung: **06.12.2017**
(21) Anmeldenummer: 16157302.7
(22) Anmeldetag: 25.02.2016
(51) Int. Cl.: E02B 8/08

(54) **FISCHLIFT ZUM TRANSPORT VON FISCHEN UND VERFAHREN ZUM BETRIEB EINES FISCHLIFTS**
FISH LIFT FOR TRANSPORT OF FISH AND METHOD FOR OPERATING A FISH LIFT
ASCENSEUR A POISSONS DESTINE A TRANSPORTER DES POISSONS ET PROCEDE DE FONCTIONNEMENT D'UN ASCENSEUR A POISSONS

(30) Priorität: 26.03.2015 DE 102015104586
(43) Veröffentlichungstag der Anmeldung: 28.09.2016
(73) Patentinhaber: Baumann, Georg, 88239 Wangen (DE)
(72) Erfinder: Baumann, Georg, 88239 Wangen (DE)
(74) Vertreter: Otten, Roth, Dobler & Partner mbB Patentanwälte

(56) Entgegenhaltungen:
- DE-A1-102014 001 825

## Beschreibung

Die Erfindung betrifft einen Fischlift zum Transport von Fischen und ein Verfahren zum Betrieb eines Fischlifts gemäß dem Oberbegriff des Anspruchs 1 bzw. des Anspruchs 6.
Aus der DE 10 2014 001 825 A1 ist ein Fischlift zum Transport von Fischen zwischen einem Oberwasser einer Staustufe und einem Unterwasser der Staustufe bekannt, wobei der Fischlift einen Schacht und einen Behälter umfasst, wobei der Schacht eine unter einem Niveau des Oberwassers liegende obere Öffnung mit einem oberen Schleusenausgang umfasst, wobei der Schacht eine unter einem Niveau des Unterwassers liegende untere Öffnung mit einem unteren Schleuseneingang umfasst, wobei der Behälter zwischen einer oberen Stellung und einer unteren Stellung verfahrbar ist und wobei der Behälter als Schwimmbehälter ausgebildet ist, welcher seine Stellungen im Schacht in Abhängigkeit von einem im Schacht vorhandenen Schachtwasserstand einnimmt.
Es ist Aufgabe der Erfindung, einen Fischlift zum Transport von Fischen bzw. ein Verfahren zum Betrieb eines Fischlifts vorzuschlagen, bei welchem bzw. durch welches Betriebsstörungen automatisch erfassbar bzw. vorhersehbar und insbesondere auch automatisch behebbar bzw. vermeidbar sind. Diese Aufgabe wird ausgehend von den Merkmalen des Oberbegriffs des Anspruchs 1 bzw. 6 durch die kennzeichnenden Merkmale des Anspruchs 1 bzw. 6 gelöst. In den jeweiligen Unteransprüchen sind vorteilhafte und zweckmäßige Weiterbildungen angegeben.

Der erfindungsgemäße Fischlift umfasst einen ersten Sensor und einen zweiten Sensor, wobei durch den ersten Sensor die jeweilige Stellung des Behälters erfassbar ist und wobei durch den zweiten Sensor der jeweils im Schacht vorhandene Schachtwasserstand erfassbar ist. Hierdurch ist es möglich, aus der Stellung des Behälters und dem Schachtwasserstand auf eine Betriebsstörung zu schließen. Durch die Kenntnis des Vorliegens einer Betriebsstörung können dann entsprechende Gegenmaßnahmen eingeleitet werden. Kern der Erfindung ist somit eine dauernde Überwachung der Stellung des Behälters und der Höhe des Schachtwasserstandes.

Es ist vorgesehen, den Fischlift mit einer Kontrolleinrichtung auszustatten, wobei die Kontrolleinrichtung Messwerte des ersten Sensors erfasst und Messwerte des zweiten Sensors erfasst und wobei die Kontrolleinrichtung die erfassten Messwerte auswertet und Eingriffsmittel entsprechend aktiviert und/oder entsprechend deaktiviert. Bei einer Ausbildung eines Eingriffsmittels als Zustandsanzeige oder Zustandssignalisierungseinrichung ist es möglich, automatisch auf das Vorliegen einer Betriebsstörung oder auf das Nichtvorliegen einer Betriebsstörung hinzuweisen. Bei einer Ausbildung eines Eingriffmittels als Komponente des Fischlifts, durch welche dessen Betrieb beeinflussbar ist, ist es möglich, zur Behebung der Betriebsstörung automatisch auf den Fischlift einzuwirken.

Weiterhin ist es vorgesehen, den ersten Sensor als berührungslosen Sensor und insbesondere als Lasersensor auszubilden und den zweiten Sensor insbesondere als Drucksensor oder als Lasersensor auszubilden. Derartige Sensoren arbeiten auch unter harten Umgebungsbedingungen zuverlässig. Es ist auch vorgesehen, sowohl den Behälter als auch den Schachtwasserstand jeweils mit wenigstens zwei, insbesondere unterschiedlichen Sensoren zu überwachen. Hierdurch ist es möglich, den Ausfall eines Sensors zu detektieren und es ist möglich, den Fischlift trotz Ausfall eines Sensors mit voller Funktion weiter zu betreiben.

Der Fischlift umfasst wenigstens einen vom Unterwasser in den Innenraum des Schachts führenden unteren Zugang und wenigstens einem vom Oberwasser in den Innenraum des Schachts führenden oberen Zugang, wobei der untere Zugang durch ein als unteres Verschlussmittel ausgebildetes Eingriffsmittel und der obere Zugang durch ein als oberes Verschlussmittel ausgebildetes Eingriffsmittel öffenbar bzw. verschließbar ist, wobei die Stellung der Verschlussmittel von der Kontrolleinrichtung über Sensoren erfassbar und über Aktoren einstellbar ist. Über derartige Eingriffsmittel ist es möglich, insbesondere auf den Schachtwasserstand Einfluss zu nehmen und somit indirekt auch auf den Behälter einzuwirken.

Weiterhin ist es vorgesehen, den Fischlift mit einem Sensor für einen Unterwasserstand des Unterwassers und einem Sensor für einen Oberwasserstand des Oberwassers auszustatten, wobei die Kontrolleinrichtung Messwerte dieser Sensoren erfasst, wobei die Kontrolleinrichtung bei einem über einem Grenzwert liegendem Unterwasserstand eine Pumpe zur Absenkung des Schachtwasserstands aktiviert, wenn der Behälter in der Abstauphase seine untere Stellung anfährt und wobei die Kontrolleinrichtung bei einem unter einem Grenzwert liegendem Oberwasserstand eine Pumpe zur Anhebung des Schachtwasserstands aktiviert, wenn der Behälter in der Aufstauphase seine obere Stellung anfährt. Hierdurch ist es möglich, in Kenntnis aber unabhängig vom Oberwasserstand und/oder vom Unterwasserstand auf den Schachtwasserstand und damit indirekt auch auf den Behälter einzuwirken und Betriebsstörungen vorbeugend zu vermeiden.

Bei dem erfindungsgemäßen Verfahren zum Betrieb eines Fischlifts ist es vorgesehen, Messwerte eines zweiten Sensors, welcher einen Schachtwasserstand erfasst, in einer Kontrolleinrichtung in Abhängigkeit davon auszuwerten, ob sich ein Behälter entweder zum Verbleib in einer oberen Stellung befindet oder zum Verbleib in einer unteren Stellung befindet oder zum Aufsteigen in einer unteren Stellung oder zum Absteigen in einer oberen Stellung oder zum Auf- oder Absteigen in einer Zwischenstellung befindet. Hierdurch ist es möglich, durch die Kontrolleinrichtung bei einer eintretenden oder vorhersehbaren Betriebsstörung die geeigneten Maßnahmen einzuleiten und Eingriffsmittel des Fischlifts so zu aktivieren und/oder deaktivieren, dass die Betriebsstörung behoben bzw. vermieden wird.

Es ist vorgesehen, die Kontrolleinrichtung derart zu programmieren, dass diese bei in der unteren Stellung befindlichem und zum Verbleib in der unteren Stellung vorgesehenem Behälter und ansteigendem Schachtwasserstand durch ein Schließen und Öffnen wenigstens eines Verschlussmittel und/oder durch ein mechanisches Reinigen wenigstens eines im Fischlift angeordneten Rechens und/oder durch Inbetriebnahme einer Pumpe, durch welche der Schachtwasserstand erhöhbar oder absenkbar ist, wenigstens einen Reinigungszyklus ablaufen lässt. Hierdurch wird erreicht, dass zuströmendes Wasser wieder besser ablaufen kann und sich der Schachtwasserstand wieder auf ein in einem Toleranzbereich liegendes Niveau einregelt.

Weiterhin ist es vorgesehen, die Kontrolleinrichtung derart zu programmieren, dass diese in der Aufstauphase bei ansteigendem Schachtwasserstand bei in der unteren Stellung oder in einer Zwischenstellung verharrendem Behälter wenigstens ein Verschlussmittel derart öffnet bzw. schließt und/oder eine Pumpe, durch welche der Schachtwasserstand erhöhbar oder absenkbar ist, derart in Betrieb nimmt, dass der Schachtwasserstand abgesenkt und anschließend wieder angehoben wird, um eine Verklemmung des Behälters im Schacht zu lösen. Hierdurch wird der Behälter derart bewegt, dass sich durch dessen Bewegung beispielweise eine durch einen Fremdkörper hervorgerufene Blockade, welcher sich zwischen den Behälter und eine Innenwand des Schachts geklemmt hat, aufgehoben wird.

Weiterhin ist es auch vorgesehen, die Kontrolleinrichtung derart zu programmieren, dass diese in der Abstauphase bei absinkendem Schachtwasserstand bei in der oberen Stellung oder in einer Zwischenstellung verharrendem Behälter wenigstens ein Verschlussmittel derart öffnet bzw. schließt und/oder eine Pumpe, durch welche der Schachtwasserstand erhöhbar oder absenkbar ist, derart in Betrieb nimmt, dass der Schachtwasserstand angehoben und anschließend wieder abgesenkt wird, um eine Verklemmung des Behälters im Schacht zu lösen. Hierdurch wird der Behälter derart bewegt, dass sich durch dessen Bewegung beispielweise eine durch einen Fremdkörper hervorgerufene Blockade, welcher sich zwischen den Behälter und eine Innenwand des Schachts geklemmt hat, aufgehoben wird.

Schließlich ist es vorgesehen, die Kontrolleinrichtung derart zu programmieren, dass diese bei in der oberen Stellung befindlichem Behälter und zum Verbleib in der oberen Stellung vorgesehenem Behälter und absinkendem Schachtwasserstand durch ein Schließen und Öffnen wenigstens eines Verschlussmittels und/oder durch ein mechanisches Reinigen wenigstens eines im Fischlift angeordneten Rechens und/oder durch Inbetriebnahme einer Pumpe, durch welche der Schachtwasserstand erhöhbar oder absenkbar ist, wenigstens einen Reinigungszyklus ablaufen lässt. Hierdurch wird erreicht, dass Wasser wieder besser zulaufen kann und sich der Schachtwasserstand wieder auf ein in einem Toleranzbereich liegendes Niveau einregelt.

Weitere Einzelheiten der Erfindung werden in der Zeichnung anhand eines schematisch dargestellten Ausführungsbeispiels beschrieben.

Hierbei zeigt:

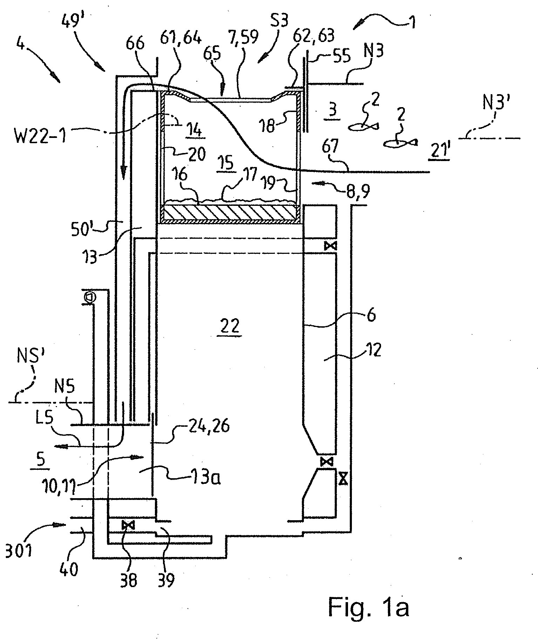

- Figur 1a bis 1e:: eine schematische Ansicht eines erfindungsgemäßen Fischlifts in verschiedenen Stellungen.

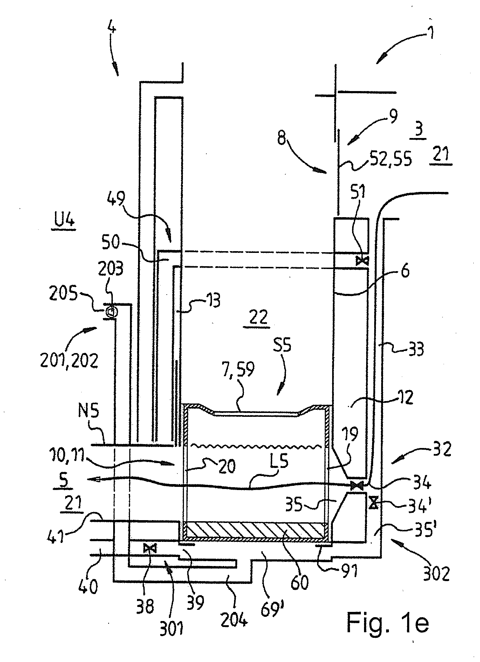

Die Figuren 1a bis 1e zeigen einen Fischlift 1 bei auf durchschnittlichem Niveau N5 stehendem Unterwasser 5 in unterschiedlichen Stellungen, wobei der Fischlift 1 bzw. eine Staustufe 4, in welche der Fischlift 1 integriert ist, in schematischen, geschnittenen Seitenansichten dargestellt ist. Anhand der Figuren 1a und 1e wird der Fischlift 1 zunächst in seiner grundsätzlichen Funktion beschrieben.

Der Fischlift 1 ist zum Transport von Fischen 2 zwischen einem Oberwasser 3 der Staustufe 4 und dem Unterwasser 5 der Staustufe 4 vorgesehen. Der Fischlift 1 umfasst einen Schacht 6 und einen Behälter 7. Hierbei umfasst der Schacht 6 eine unter einem Niveau N3 des Oberwassers 3 liegende obere Öffnung 8 mit einem oberen Schleusenausgang 9. Weiterhin umfasst der Schacht 6 eine unter dem Niveau N5 des Unterwassers 5 liegende untere Öffnung 10 mit einem unteren Schleuseneingang 11. Der Behälter 7 ist zwischen einer in der Figur 1a gezeigten oberen Stellung S3 und einer in der Figur 1e gezeigten unteren Stellung S5 verfahrbar. In dem Schacht 6 ist der Behälter 7 an zwei sich gegenüber liegenden Schienen 12, 13 geführt. Der Behälter 7, welcher in der Figur 1a in seiner oberen Stellung S3 gezeigt ist, ist derart geformt, dass dieser die beiden Schienen 12 ,13 umgreift. Der Behälter 7 umfasst einen Transportraum 14. Der Transportraum 14 bildet ein Becken 15. Das Becken 15 weist einen Beckenboden 16 auf, auf welchem Sohlsubstrat 17 angeordnet ist. Hierdurch stellt das Becken 15 für die Fische 2 und andere Lebewesen eine weitgehend natürliche Umgebung dar. In seiner Wandung 18 weist der Behälter 7 eine erste seitliche Öffnung 19 und eine zweite seitliche Öffnung 20 auf, welche in den Transportraum 14 führen. Hierbei ist die Öffnung 19 des Behälters 7 auf die obere Öffnung 8 des Schachts 6 ausgerichtet, wenn der Behälter 7 in seiner oberen Stellung S3 steht und hierbei ist die Öffnung 20 des Behälters 7 auf die untere Öffnung 10 des Schachts 6 ausgerichtet, wenn der Behälter 7 in seine unteren Stellung S5 steht. Wie aus der Figur 1e ersichtlich ist, liegt die zweite seitliche Öffnung 20 in der Stellung S5 unter dem Niveau N5 des Unterwassers 5 und führt in das Unterwasser 5 bzw. eine Einschwimmzone 21. Die zweite seitliche Öffnung 20 des Behälters 7 liegt in dessen unterer Stellung S5 dem Schleuseneingang 11 und der unteren Öffnung 10 des Schachts 6 derart gegenüber, dass bei geöffnetem Schleuseneingang 11 eine gegenüber dem den Behälter 7 umgebenden Innenraum 22 des Schachts 6 abgeschirmte Verbindung zum Unterwasser 5 besteht. Der Schleuseneingang 11 ist in der zweiten Schiene 13 ausgebildet, wobei diese zweite Schiene 13 eine auf die Öffnung 20 des Behälters 7 ausgerichtete untere Schienenöffnung 13a aufweist. Hierbei umfasst der Schleuseneingang 11, die Öffnung 10, welche als Rohrabschnitts ausgeführt ist, ein Sperrglied 24 und ein nicht dargestelltes Betätigungsmittel für das Sperrglied 24. Das Sperrglied 24 ist als Schieber 26 ausgebildet und das nicht dargestellte Betätigungsmittel umfasst Aktuatoren und ein Gestänge. In der Figur 1e steht der Schieber 26 in einer hochgezogenen Stellung, so dass für die Fische 2 der Weg zwischen dem Unterwasser 5 und dem Transportraum 14 des Behälters 7 freigegeben ist. Das Sperrglied 24 und das nicht dargestellte Betätigungsmittel des Schleuseneingangs 11 sind in einem nicht dargestellten Hohlraum der zweiten Schiene 13 angeordnet und liegen somit geschützt in dem Schacht 6. In dem Transportraum 14 des Behälters 7 und in der Einschwimmzone 21 des Unterwassers 5 wird bei in der unteren Stellung S5 stehendem Behälter 7 und offenem Schleuseneingang 11 eine Leitströmung L5 über eine erste Leitwasserversorgung 32 hergestellt. Die erste Leitwasserversorgung 32 umfasst einen Versorgungskanal 33, ein Versorgungskanalventil 34 und eine Leitwasserdüse 35. Der Versorgungskanal 33 wird aus dem Oberwasser 3 gespeist, wobei die durch den Versorgungskanal 33 zuströmende Wassermenge durch das Versorgungskanalventil 34 geregelt wird. Die Leitwasserdüse 35 liegt der ersten seitlichen Öffnung 19 des Behälters 7 gegenüber, wenn dieser in seiner unteren Stellung S5 steht. Durch die Leitwasserdüse 35 strömt aus dem Oberwasser 3 Wasser als Leitströmung L5 in den Transportraum 14 des Behälters 7 und durch dessen zweite Öffnung 20 und den geöffneten Schleuseneingang 11 weiter in das Unterwasser 5 bzw. die Einschwimmzone 21.

Der Fischlift 1 umfasst weiterhin noch eine Ablasseinrichtung 301. Diese umfasst eine Ablassschleuse 38, durch welche eine in dem Schacht 6 ausgebildete Ablassöffnung 39 verschließbar ist. Die Ablassöffnung 39 ist unterhalb der unteren Öffnung 10 angeordnet und führt in einen Ablass- und Spülkanal 40, welcher unter einem Boden 41 der Einschwimmzone 21, vorbei an der Einschwimmzone 21 in das Unterwasser 5 führt. Solange der Behälter 7 in der unteren Stellung S5 steht, ist ein Öffnen der Ablassschleuse 38 allenfalls dann vorgesehen, wenn der Versorgungskanal 33 durchgespült werden muss. In einem derartigen Fall wird dann ein Ventil 34' geöffnet und Oberwasser aus dem Versorgungskanal 33 über eine Umleitung 35' unter den Behälter 7 geleitet. Hierdurch ist eine Spüleinrichtung 302 gebildet, durch welche an der Leitwasserdüse 35 vorbei Oberwasser unter dem Behälter 7 abströmen kann, ohne dass die im Behälter 7 und in der Einschwimmzone 21 ausgebildete Leitströmung L5 dadurch beeinträchtigt wird.

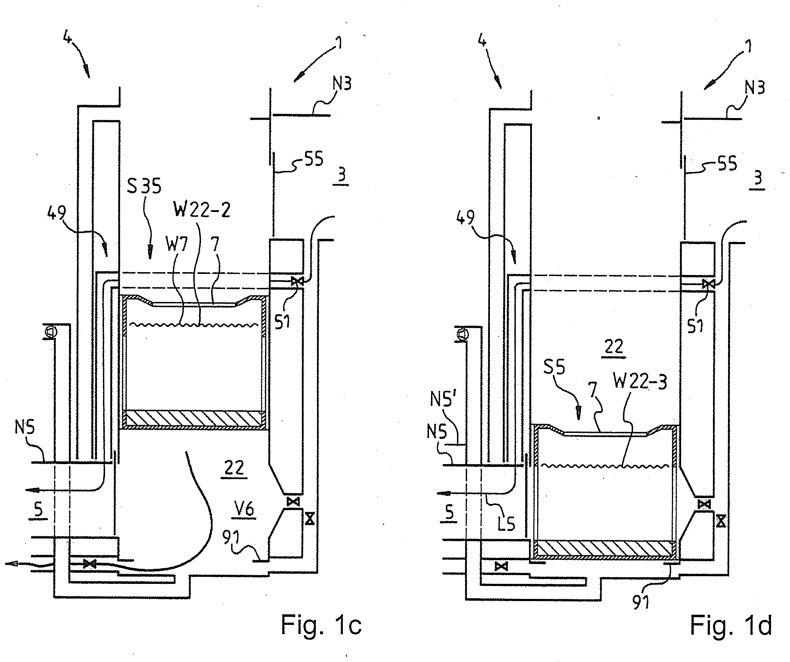

Der Fischlift 1 umfasst weiterhin eine zweite Leitwasserversorgung 49. Diese umfasst einen Versorgungskanal 50, welcher aus dem Oberwasser 3 gespeist wird, und ein Versorgungskanalventil 51. Der Versorgungskanal 50 der zweiten Leitwasserversorgung 49 mündet vor dem unteren Schleuseneingang 11 in die Einschwimmzone 21 des Unterwassers 5. In der in den Figuren 1e gezeigten unteren Stellung S5 des Behälters 7 ist das Versorgungskanalventil 51 geschlossen, so dass durch die zweite Leitwasserversorgung 49 kein Oberwasser 3 in das Unterwasser 5 geleitet wird. Die zweite Leitwasserversorgung 49 wird aktiviert, wenn der Schleuseneingang 11 verschlossen ist, um die Lockströmung im Unterwasser 5 aufrecht zu erhalten. Wie aus den Figur 1d und 1e weiter hervorgeht ist der Schleusenausgang 9 verschlossen, wenn der Behälter 7 in der unteren Stellung S5 steht oder in die untere Stellung fährt (siehe Figur 1c). Der Schleusenausgang 9 umfasst ein Sperrglied 52 und nicht dargestellte Betätigungsmittel, wobei seine Öffnung 8 durch einen Rohrabschnitt gebildet ist, welcher das Oberwasser 3 durch eine auf die obere Öffnung 8 des Schachts 6 und auf die Öffnung 19 des in der oberen Stellung S3 stehenden Behälters 7 ausgerichtete obere Schienenöffnung mit dem Innenraum 22 des Schachts 6 verbindet. Das Sperrglied 52 ist als Schieber 55 ausgebildet und die nicht dargestellten Betätigungsmittel sind durch nicht dargestellten Aktuatoren und ein nicht dargestelltes Gestänge gebildet. Durch den geschlossenen Schleusenausgang 9 wird das Einströmen von Oberwasser 3 in den Innenraum 22 des Schachts 6 verhindert. Der Behälter 7 ist als Schwimmbehälter 59 ausgebildet und umfasst einen Schwimmkörper 60. Hierdurch erhält der Behälter 7 bei in dem Innenraum 22 des Schachts 6 steigendem Wasserstand derart starken Auftrieb, dass dieser an den Schienen 12, 13 geführt aus seiner unteren Stellung S5 aufschwimmt und mit steigendem Wasserstand im Schacht 6 aus der in der Figur 1e gezeigten unteren Stellung S5 in die in der Figur 1a gezeigte obere Stellung S3 bewegt wird. Hierbei wird ein steigender Wasserstand in dem Schacht 6 dadurch erzeugt, dass der untere Schleuseneingang 11 durch den Schieber 26 geschlossen wird und weiterhin über die erste Leitwasserversorgung 32 und/oder über die Spüleinrichtung 302 Oberwasser 3 zugeleitet wird, wobei die Ablasseinrichtung 301 geschlossen bleibt. Eine Lockströmung L5 in der Einschwimmzone 21 wird dann über die zweite Leitwasserversorgung 49 aufrechterhalten. Sobald der Behälter 7 in der in der Figur 1a gezeigten oberen Stellung S3 steht, erfolgt eine Aufrechterhaltung der Lockströmung 21 im Unterwasser 5 zusätzlich oder alternativ auch über eine dritte Leitwasserversorgung 49', welche aus dem Behälter 7 überströmendes Oberwasser 3 durch einen Versorgungskanal 50' dem Unterwasser 5 im Bereich der Einschwimmzone 21 zuleitet.

Die obere Stellung S3 hat der Behälter 7 - wie in der Figur 1a gezeigt - erreicht, wenn der schwimmende Behälter 7 mit seiner Oberseite 61 gegen einen den Schacht 6 nach oben begrenzendes Rückhaltemittel 62, welches als Anschlag 63 ausgebildet ist, anschwimmt und durch dieses an einer weiteren, nach oben gerichteten Hubbewegung gehindert wird. Sobald der Behälter 7 an dem Anschlag 63 anliegt kann der obere Schleusenausgang 9 geöffnet werden, so dass Oberwasser 3 in den Transportraum 14 des Behälters 7 einströmt. Eine Decke 64 des Behälters 7, welche die Oberseite 61 bildet, weist eine dritte Öffnung 65 auf, durch welche der Transportraum 14 des Behälters 7 von oben zugänglich ist. Da der Behälter 7 durch den Anschlag 63 mit seiner Oberseite 61 unterhalb des Niveaus N3 des Oberwassers 3 gehalten wird, quillt Oberwasser 3, welches durch den oberen Schleusenausgang 9 in den Transportraum 14 einströmt durch die Öffnung 65 nach oben aus dem Behälter 7 heraus. Das überquellende Oberwasser 3 fließt über eine Oberkante 66 des Schachts 6 und wird der dritten Leitwasserversorgung 49' zugeführt. Hierdurch stellt sich in dem Transportraum 14 nach dem Öffnen des Schleusenausgangs 9 eine von einer Ausschwimmzone 21' des Oberwassers 3 ausgehende obere Leitströmung 67 ein, durch welche die Fische 2 aus dem Transportraum 14 heraus in das Oberwasser 3 geleitet werden bzw. aus dem Oberwasser 3 in den Transportraum 14 geleitet werden. Solange der Behälter 7 in seiner oberen Stellung S3 steht, wird die Lockströmung L5 im Unterwasser 5 durch die zweite und/oder die dritte Leitwasserversorgung 49 bzw. 49' aufrechterhalten.

Bei Bedarf ist es vorgesehen, das Versorgungskanalventil 34 oder das Ventil 34' der Spüleinrichtung 302 leicht geöffnet zu halten, um Leckverluste am unteren Schleuseneingang 11 oder an der Ablassschleuse 38 zu kompensieren und den Behälter 7 konstant an dem Anschlag 63 zu halten.

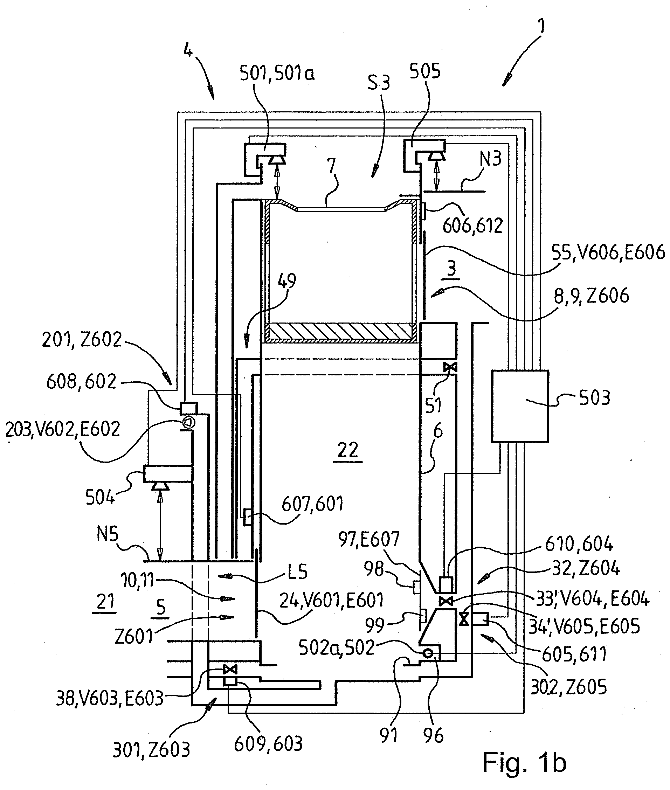

Damit der in der Figur 1a in der oberen Stellung S3 stehende Behälter 7 seine Stellung S3 verlassen kann und Fische 2 in das Unterwasser 5 transportieren kann, wird in einem ersten Schritt der Schieber 55 des oberen Schleuseneingangs 9 geschlossen. Hierdurch wird die obere Leitströmung 67 unterbrochen. Zum Ausgleich wird die zweite Leitwasserversorgung 49 durch Öffnen des Ventils 51 aktiviert, so dass in dem Unterwasser 5 eine Lockströmung erhalten bleibt, wie dies in der Figur 1b gezeigt ist. Zum Absenken des Behälters 7 aus der oberen Stellung S3 wird dann über die Ablassöffnung 39 durch den Ablass- und Spülkanal 40 aus dem Innenraum 22 des Schachts 8 Wasser in das Unterwasser 5 abgelassen, wobei dies durch Öffnen eines Ventils erfolgt, welches die Ablassschleuse 38 bildet. Hierdurch sinkt der Behälter 7 in dem Schacht 8 ab, wobei der Auftrieb des Behälters 7 derart bemessen ist, dass im Behälter 7 ein Wasserstand W7 erhalten bleibt, welcher den Fischen 2 eine ausreichende Wassertiefe gewährleistet. In der Figur 1c ist dargestellt, wie der Behälter 7 bereits auf eine Mittelstellung S35 zwischen seiner oberen Stellung S3 und seiner unteren Stellung S5 abgesunken ist. In dieser Stellung S35 weist das Wasser in dem Innenraum 22 des Schachts 6 einen Schachtwasserstand W22-2 auf, welcher dem Wasserstand W7 im Behälter 7 entspricht. Durch weiteres Ablassen von Wasser aus einem Innenraum 22 des Schachts 6 über den Ablass- und Spülkanal 40 auf das Niveau N5 des Unterwassers 5 sinkt der Behälter 7 in die in der Figur 1d gezeigte untere Stellung S5 ab. Während der gesamten Absinkphase bleibt die untere Öffnung 10 des Schachts 8 geschlossen, damit die im Unterwasser 5 hergestellte Leitströmung nicht durch aus dem Schacht 8 austretendes Wasser zu groß wird. Entsprechend mündet auch der Ablass- und Spülkanal 40 außerhalb der Einschwimmzone 21 in das Unterwasser 5. Um den Fischen 2, welche sich in dem Behälter 7 befinden, ein Ausschwimmen in das Unterwasser 5 zur ermöglichen, wird nunmehr die untere Öffnung 10 des Schachts 6 geöffnet. Weiterhin wird zur Herstellung einer bis in den Transportraum 14 des Behälters 7 reichenden Lockströmung das Ventil 51 der zweiten Leitwasserversorgung 49 geschlossen und das Ventil 34 der ersten Leitwasserversorgung 32 geöffnet, um Oberwasser 3 durch die Leitwasserdüse 35 in den Transportraum 14 des Behälters 7 zu leiten, aus welchem das eingeleitete Wasser dann in das Unterwasser 5 bzw. die Einschwimmzone 21 ausströmt und die untere Lockströmung L5 bildet.

Bei durchschnittlichem Wasserstand N5 des Unterwassers 5 bleibt eine Zusatzeinrichtung 201 des Fischlifts 1 außer Betrieb. Diese Zusatzeinrichtung 201 ist als Pumpeinrichtung 202 ausgebildet, welche als Wasserabflusseinrichtung und/oder als Wasserzuflusseinrichtung arbeitet, und umfasst eine mechanische Pumpe 203, eine erste Leitung 204 zur Verbindung der Pumpe 203 mit dem Schacht 6 und eine zweite Leitung 205 zur Verbindung der Pumpe 203 mit der Umgebung U4 der Staustufe 4. Hierbei mündet die erste Leitung 204 in einem Bodenbereich 69' des Schachts 6 in den Schacht 6 und hierbei mündet die zweite Leitung 205 außerhalb der Einschwimmzone 21 bzw. Ausschwimmzone 21' in die Umgebung U4 und insbesondere in das Unterwasser 5 oder in das Oberwasser 3.

Bei durchschnittlichem Wasserstand N5 des Unterwassers 5 oder bei einem unter dem durchschnittlichen Wasserstand N5 liegenden Wasserstand des Unterwassers 5 sinkt der Behälter 7 beim Ablassen von in dem Innenraum 22 des Schachts 6 enthaltenen Wasser bis auf untere Anschlagmittel 91 ab, so dass dessen seitliche Öffnung 20 auf die untere Öffnung 10 des Schachts 6 ausgerichtet ist.

Bei erhöhtem Wasserstand N5' des Unterwassers, wie dieser in der Figur 1a angedeutet ist, ist es mittels der aus Ablassöffnung 39, Ablassschleuse 38 und Ablasskanal 40 bestehenden Ablasseinrichtung 301 nicht möglich, den Behälter 7 in dem Schacht 6 bis auf die unteren Anschlagmittel 91 abzusenken, da ein Schachtwasserstand über die Ablasseinrichtung 301 und/oder über die untere Öffnung 10 des Schachts 6 nur bis auf das Niveau N5' absenkbar ist. Entsprechend wird zum Absenken des Schachtwasserstands dann die Pumpe 203 aktiviert und mit deren Hilfe der Schachtwasserstand W22-3 (siehe Figur 1d) unter das Niveau N5' soweit abgesenkt, dass der Behälter 7 die Stellung S5 einnimmt. Umgekehrt wird bei einem unter dem Niveau N3 liegenden Oberwasserstand N3' (siehe Figur 1a) die Pumpe 203 so betrieben, dass diese so viel Wasser in den Schacht 6 fördert, dass ein Schachtwasserstand W22-1 erreicht wird und hierdurch der Behälter 7 in die in der Figur 1a gezeigte Stellung S3 anhoben und in dieser gehalten wird. Selbstverständlich treten in dieser Situation dadurch Leckverluste auf, dass Wasser aus dem Schacht 6 durch dessen obere Öffnung 8 in das Oberwasser 3 abströmt.

Um die Figuren übersichtlich zu halten sind exemplarisch nur in der Figur 1b weitere Komponenten des Fischlifts 1 dargestellt. Bei diesen Komponenten handelt es sich um einen Sensor 501 zur stufenlosen Erfassung der jeweiligen Stellung - z.B. Stellung S3, S5 oder S35 - des Behälters 7 und um einen Sensor 502 zur stufenlosen Erfassung des Schachtwasserstands - z.B. Schachtwasserstand W22-1, W22-2, oder W22-3. Hierbei ist der erste Sensor 501 als Lasersensor 501a ausgeführt, welcher alle Stellungen und z.B. die Stellungen S3, S5, S35 des Behälters 7 berührungslos erfasst. Der zweite Sensor 502 ist als Drucksensor 502a ausgebildet, welcher in einem mit dem Innenraum 22 des Schachts 6 verbundenen Aufnahmeraum 96 angeordnet ist. Als weitere Komponenten umfasst der Fischlift 1 eine Kontrolleinrichtung 503, welche eine Steuer- bzw. Regeleinrichtung bildet und an welche die Sensoren 501 und 502 die erfassten Messwerte übertragen. Der Fischlift 1 umfasst einen dritten Sensor 504 zur Messung des Unterwassersstand N5 bzw. des Niveaus des Unterwassers 5 und einen vierten Sensor 505 zur Messung des Oberwasserstands N3 bzw. des Niveaus des Oberwassers 3.

Der Fischlift 1 umfasst auch einen vom Unterwasser 5 in den Schacht 6 führenden Zugang Z601, welcher durch die Öffnung 10 bzw. den unteren Schleuseneingang 11 gebildet ist, wobei das Sperrglied 24 ein als unteres Verschlussmittel V601 ausgebildetes Eingriffsmittel E601 bildet. Der Fischlift 1 umfasst einen weiteren vom Unterwasser 5 in den Schacht 6 führenden Zugang Z602, welcher durch die Zusatzeinrichtung 201 gebildet ist, deren Pumpe 203 wahlweise Wasser in den Innenraum 22 des Schachts 6 oder aus dem Schacht 6 pumpt, wobei die Pumpe 203 ein als unteres Verschlussmittel V602 ausgebildetes Eingriffsmittel E602 bildet. Es ist auch vorgesehen, hier zusätzlich zu der Pumpe 203 ein Ventil zu verbauen, welches das Verschlussmittel bildet. Der Fischlift 1 umfasst einen dritten vom Unterwasser 5 in den Schacht 6 führenden Zugang Z603, welcher durch die Ablasseinrichtung 301 gebildet ist, wobei das Ventil 38 ein als unters Verschlussmittel V603 ausgebildetes Eingriffsmittel E603 bildet.

Weiterhin umfasst der Fischlift 1 auch einen vom Oberwasser 3 in den Schacht 6 führenden Zugang Z604, welcher durch die erste Leitwasserversorgung 32 ausgebildet ist, wobei ein Ventil 33' ein als oberes Verschlussmittel V604 gebildetes Eingriffsmittel E604 bildet. Der Fischlift 1 umfasst einen weiteren vom Oberwasser 3 in den Schacht 6 führende Zugang Z605, welcher durch die Spüleinrichtung 302 gebildet ist, wobei ein Ventil 34' ein als oberes Verschlussmittel V605 ausgebildetes Eingriffsmittel E605 bildet. Der Fischlift 1 umfasst einen dritten vom Oberwasser in den Schacht 6 führenden Zugang Z606, welcher durch die obere Öffnung 8 bzw. den oberen Schleusenausgang 9 gebildet ist, wobei der Schieber 55 ein als oberes Verschlussmittel V606 ausgebildetes Eingriffsmittel E606 bildet.

Die Stellungen dieser Verschlussmittel V601 bis V606 sind durch Sensoren 601 bis 606 erfassbar und die Verschlussmittel V601 bis V606 sind über Aktoren 607 bis 612 einstellbar bzw. aktivierbar und deaktivierbar.

Weiterhin umfasst die erste Leitwasserversorgung 32 dort, wo sich diese in den Innenraum 22 des Schachts 6 öffnet einen Rechen 97, welcher eine Reinigungsvorrichtung 98 und einen Aktor 99 zum Antrieb der Reinigungsvorrichtung 98 umfasst. Der Rechen bildet ein weiteres Eingriffsmittel E607.

Hinsichtlich der in den einzelnen Figuren angedeuteten Schachtwasserstände W22-1, W22-2 bzw. W22-3 wird darauf hingewiesen, dass der Behälter 6 von dem im Innenraum 22 des Schachts 6 befindlichen Wasser nicht wie ein zu einer Innenwand 22a abdichtender Kolben bewegt wird, sondern im Innenraum 22 schwimmt und wie in der Figur 1c durch den Wasserstand W7 angedeutet etwa zu 3/4 seiner Höhe unter Wasser liegt. Hierbei ist der in der Figur 1c angedeutete Wasserstand W7 im Behälter 7 gleichzeitig auch der Schachtwasserstand W22-2, da zwischen dem Behälter 7 und der Innenwand 22a des Schachts 6 ein Wasserpolster liegt und das Wasser durch die seitlichen Öffnungen 19, 20 des Behälters 7 in dessen Transportraum 14 eindringt. Bei einer Betriebsstörung, welche dadurch hervorgerufen ist, dass der Behälter 7 in dem Schacht 6 verklemmt ist, ist die Kontrolleinrichtung 503 derart programmiert, dass der Schachtwasserstand zum Freischwimmen des Behälters 7 im Verhältnis zur aktuellen Stellung des Behälters 7 durch eine Aktivierung oder Deaktivierung wenigstens eines der Eingriffsmittel E601 bis E607 nur soweit abgesenkt wird, dass in dem Transportraum 14 des Behälters 7 ein für die dort befindlichen Fische 2 hinreichender Füllstand erhalten bleibt. Hierzu sind entsprechende Werte, welche sich an der Dimensionierung und dem Schwimmverhalten des Behälters orientieren in der Kontrolleinrichtung hinterlegt.

### Bezugszeichenliste:

- 1, 1a, 1b, 1c: Fischlift
- 2: Fisch
- 3: Oberwasser
- 4: Staustufe
- 5: Unterwasser
- 6: Schacht
- 7: Behälter
- 8: obere Öffnung des Schachts 6
- 9: oberer Schleusenausgang
- 10: untere Öffnung des Schachts 6
- 11: unterer Schleuseneingang
- 12: erste Schiene des Schachts 6
- 13: zweiten Schiene 13
- 13a: untere Schienenöffnung
- 14: Transportraum in 7
- 15: Becken in 7
- 16: Beckenboden von 15
- 17: Sohlsubstrat
- 18: Wandung des Behälters 7
- 19: erste seitliche Öffnung in 7
- 20: zweite seitliche Öffnung in 7
- 21: Einschwimmzone im Unterwasser 5
- 21': Ausschwimmzone im Oberwasser 3
- 22: Innenraum des Schachts 6
- 22a: Innenwand von 6
- 23: nicht belegt
- 24: Sperrglied von 11
- 25: nicht belegt
- 26: Schieber von 11
- 32: erste Leitwasserversorgung
- 33: Versorgungskanal von 32
- 33': Ventil von 32
- 34: Versorgungskanalventil von 32
- 34': Ventil von 302
- 35, 35a: Leitwasserdüse von 302
- 35': Umleitung von 302
- 36, 37: nicht belegt
- 38: Ablassschleuse
- 39: Ablassöffnung von 38
- 40: Ablass- und Spülkanal von 38

- 91: Anschlagmittel
- 96: Aufnahmeraum für 502
- 97: Rechen
- 98: Reinigungsvorrichtung
- 99: Aktuator

- 201: Zusatzeinrichtung
- 202: Pumpeinrichtung
- 203: mechanische Pumpe
- 204: erste Leitung von 201 bzw. 202
- 205: zweite Leitung von 201 bzw. 202

- 301: Ablasseinrichtung umfasst 38 - 40
- 302: Spüleinrichtung umfasst 34' und 35'

- 501, 502: erster, zweiter Sensor
- 501a: Lasersensor
- 502a: Drucksensor
- 503: Kontrolleinrichtung
- 504, 505: dritter, vierter Sensor

- 601 - 606: Sensor
- 607 - 612: Aktor

- E601 - E607: Eingriffsmittel
- L5: Lockströmung im Unterwasser
- N3: Niveau des Oberwassers 3, Oberwasserstand
- N3': niedriges Niveau des Oberwassers 3
- N5: Niveau des Unterwassers 5, Unterwasserstand
- N5': erhöhtes Niveau des Unterwassers 5
- S3: obere Stellung des Behälters 7
- S5: untere Stellung des Behälters 7
- S35: Zwischenstellung des Behälters 7
- U4: Umgebung
- V601 - V606: Verschlussmittel
- W7: Wasserstand in 7
- W22-1: oberer Schachtwasserstand
- W22-2: mittlerer Schachtwasserstand
- W22-3: unterer Schachtwasserstand
- Z601 - Z603: unterer Zugang
- Z604 - Z606: oberer Zugang

## Patentansprüche

1. Fischlift (1) zum Transport von Fischen (2) zwischen einem Oberwasser (3) einer Staustufe (4) und einem Unterwasser (5) der Staustufe (4) umfassend
- einen Schacht (6) und einen Behälter (7),
- wobei der Schacht (6) eine unter einem Niveau (N3) des Oberwassers (3) liegende obere Öffnung (8) mit einem oberen Schleusenausgang (9) umfasst,
- wobei der Schacht (6) eine unter einem Niveau (N5) des Unterwassers (5) liegende untere Öffnung (10) mit einem unteren Schleuseneingang (11) umfasst,
- wobei der Behälter (7) zwischen einer oberen Stellung (S3) und einer unteren Stellung (S5) verfahrbar ist und
- wobei der Behälter (7) als Schwimmbehälter (59) ausgebildet ist, welcher seine Stellungen (S3; S5; S35) im Schacht (6) in Abhängigkeit von einem im Schacht (6) vorhandenen Schachtwasserstand (W22-1; W22-2; W22-3) einnimmt,
**dadurch gekennzeichnet,**
- **dass** der Fischlift (1) einen ersten Sensor (501) und einen zweiten Sensor (502) umfasst,
- wobei durch den ersten Sensor (501) die jeweilige Stellung (S3; S5; S35) des Behälters (7) erfassbar ist und
- wobei durch den zweiten Sensor (502) der jeweils im Schacht (6) vorhandene Schachtwasserstand (W22-1; W22-2; W22-3) erfassbar ist.

2. Fischlift nach Anspruch 1, **dadurch gekennzeichnet, dass** der Fischlift (1) eine Kontrolleinrichtung (503) umfasst, wobei die Kontrolleinrichtung (503) Messwerte des ersten Sensors (501) erfasst und Messwerte des zweiten Sensors (502) erfasst und wobei die Kontrolleinrichtung (503) die erfassten Messwerte auswertet und Eingriffsmittel (E601 - E607) entsprechend aktiviert und/oder entsprechend deaktiviert.

3. Fischlift nach Anspruch 1, **dadurch gekennzeichnet, dass** der erste Sensor (501) als berührungsloser Sensor und insbesondere als Lasersensor (501a) ausgebildet ist und dass zweite Sensor (502) insbesondere als Drucksensor (502a) oder als Lasersensor ausgebildet ist.

4. Fischlift nach wenigstens einem der Ansprüche 1 bis 3, **dadurch gekennzeichnet, dass** der Fischlift (1) wenigstens einen vom Unterwasser (5) in den Schacht (6) führenden unteren Zugang (Z601 - Z603) und wenigstens einen vom Oberwasser (3) in den Schacht (6) führenden oberen Zugang (Z604 - Z606) umfasst, wobei der untere Zugang (Z601 - Z603) durch ein als unteres Verschlussmittel (V601 - V603) ausgebildetes Eingriffsmittel (E601 - E603) und der obere Zugang (Z604 - Z606) durch ein als oberes Verschlussmittel (V604 - V606) ausgebildetes Eingriffsmittel (E604 - E606) öffenbar bzw. verschließbar ist, wobei die Stellung der Verschlussmittel (V604 - V606) von der Kontrolleinrichtung (503) über Sensoren (601 - 606) erfassbar und über Aktoren (607 - 612) einstellbar ist.

5. Fischlift nach wenigstens einem der Ansprüche 1 bis 4, **dadurch gekennzeichnet,**
- **dass** der Fischlift (1) einen Sensor (504) für einen Unterwasserstand (N5, N5') des Unterwassers (5) und einen Sensor (505) für einen Oberwasserstand (N3, N3') des Oberwassers (3) umfasst,
- wobei die Kontrolleinrichtung (503) Messwerte dieser Sensoren (504, 505) erfasst,
- wobei die Kontrolleinrichtung (503) bei einem über einem Grenzwert (N5) liegendem Unterwasserstand (N5') eine Pumpe (203) zur Absenkung des Schachtwasserstands aktiviert, wenn der Behälter (7) in der Abstauphase seine untere Stellung (S5) anfährt und
- wobei die Kontrolleinrichtung (503) bei einem unter einem Grenzwert (N3) liegendem Oberwasserstand (N3') eine Pumpe (203) zur Anhebung des Schachtwasserstands aktiviert, wenn der Behälter (7) in der Aufstauphase seine obere Stellung (S5) anfährt.

6. Verfahren zum Betrieb eines Fischlifts (1), wobei der Fischlift (1) insbesondere nach wenigstens einem der vorhergehenden Ansprüche ausgebildet ist, **dadurch gekennzeichnet, dass** Messwerte eines zweiten Sensors (502) in einer Kontrolleinrichtung (503) in Abhängigkeit davon ausgewertet werden, ob sich ein Behälter (7)
- entweder zum Verbleib in einer oberen Stellung (S3) befindet
- oder zum Verbleib in einer unteren Stellung (S5) befindet
- oder zum Aufsteigen in unteren Stellung (S5) oder zum Absteigen in einer oberen Stellung (S3) oder zum Auf- oder Absteigen in einer Zwischenstellung (S35) befindet.

7. Verfahren nach Anspruch 6, **dadurch gekennzeichnet, dass** die Kontrolleinrichtung (503) derart programmiert ist, dass diese bei in der unteren Stellung (S5) befindlichem und zum Verbleib in der unteren Stellung (S5) vorgesehenem Behälter (7) und ansteigendem Schachtwasserstand durch ein Schließen und Öffnen wenigstens eines Verschlussmittels (V601 - V606) und/oder durch ein mechanisches Reinigen wenigstens eines im Fischlift (1) angeordneten Rechens (97) und/oder durch Inbetriebnahme einer Pumpe (203), durch welche der Schachtwasserstand erhöhbar oder absenkbar ist, wenigstens einen Reinigungszyklus ablaufen lässt.

8. Verfahren nach Anspruch 6, **dadurch gekennzeichnet, dass** die Kontrolleinrichtung (503) derart programmiert ist, dass diese in der Aufstauphase bei ansteigendem Schachtwasserstand bei in der unteren Stellung (S5) oder in einer Zwischenstellung (S35) verharrendem Behälter (7) wenigstens ein Verschlussmittel (V601 - V606) derart öffnet bzw. schließt und/oder eine Pumpe (203), durch welche der Schachtwasserstand erhöhbar oder absenkbar ist, derart in Betrieb nimmt, dass der Schachtwasserstand abgesenkt und anschließend wieder angehoben wird, um eine Verklemmung des Behälters (7) im Schacht (6) zu lösen.

9. Verfahren nach Anspruch 6, **dadurch gekennzeichnet, dass** die Kontrolleinrichtung (503) derart programmiert ist, dass diese in der Abstauphase bei absinkendem Schachtwasserstand bei in der oberen Stellung (S3) oder in einer Zwischenstellung (S35) verharrendem Behälter (7) wenigstens ein Verschlussmittel (V601 - V606)derart öffnet bzw. schließt und/oder eine Pumpe (203), durch welche der Schachtwasserstand erhöhbar oder absenkbar ist, derart in Betrieb nimmt, dass der Schachtwasserstand angehoben und anschließend wieder abgesenkt wird, um eine Verklemmung des Behälters (7) im Schacht (6) zu lösen.

10. Verfahren nach Anspruch 6, **dadurch gekennzeichnet, dass** die Kontrolleinrichtung (503) derart programmiert ist, dass diese bei in der oberen Stellung (S3) befindlichem Behälter (7) und zum Verbleib in der oberen Stellung (S3) vorgesehenem Behälter (7) und absinkendem Schachtwasserstand durch ein Schließen und Öffnen wenigstens eines Verschlussmittels (V601 - V606) und/oder durch ein mechanisches Reinigen wenigstens eines im Fischlift (1) angeordneten Rechens (97) und/oder durch Inbetriebnahme einer Pumpe (203), durch welche der Schachtwasserstand erhöhbar oder absenkbar ist, wenigstens einen Reinigungszyklus ablaufen lässt.

## Claims

1. Fish lift (1) for transporting fish (2) between a headwater (3) of a barrage (4) and a tailwater (5) of the barrage (4) comprising
- a shaft (6) and a vessel (7),
- wherein the shaft (6) comprises an upper opening (8) lying under a level (N3) of the headwater (3) and having an upper lock outlet (9),
- wherein the shaft (6) comprises a lower opening (10) which lies under a level (N5) of the tailwater (5) and has a lower lock inlet (11),
- wherein the vessel (7) can be moved between an upper position (S3) and a lower position (S5), and
- wherein the vessel (7) is embodied as a floating vessel (59) which assumes its positions (S3; S5; S35) in the shaft (6) as a function of a shaft water level (W22-1; W22-2; W22-3) which is present in the shaft (6),
**characterized**
- **in that** the fish lift (1) comprises a first sensor (501) and a second sensor (502),
- wherein the respective position (S3; S5; S35) of the vessel (7) can be sensed by the first sensor (501), and
- wherein the shaft water level (W22-1; W22-2; W22-3) which is respectively present in the shaft (6) can be sensed by the second sensor (502).

2. Fish lift according to Claim 1, **characterized in that** the fish lift (1) comprises a control device (503), wherein the control device (503) acquires measured values of the first sensor (501) and acquires measured values of the second sensor (502), and wherein the control device (503) evaluates the acquired measured values and correspondingly activates and/or correspondingly deactivates engagement means (E601 - E607).

3. Fish lift according to Claim 1, **characterized in that** the first sensor (501) is embodied as a contactless sensor and, in particular, as a laser sensor (501a), and **in that** second sensor (502) is embodied, in particular, as a pressure sensor (502a) or as a laser sensor.

4. Fish lift according to at least one of Claims 1 to 3, **characterized in that** the fish lift (1) comprises at least one lower access (Z601 - Z603) which leads into the shaft (6) from the tailwater (5), and at least one upper access (Z604 - Z606) which leads into the shaft (6) from the headwater (3), wherein the lower access (Z601 - Z603) can be opened or closed by an engagement means (E601 - E603) which is embodied as a lower closure means (V601 - V603), and the upper access (Z604 - Z606) can be opened or closed by an engagement means (E604 - E606) which is embodied as an upper closure means (V604 - V606), wherein the position of the closure means (V604 - V606) can be sensed by the control device (503) by means of sensors (601 - 606) and can be adjusted by means of actuators (607 - 612).

5. Fish lift according to at least one of Claims 1 to 4, **characterized**
- **in that** the fish lift (1) comprises a sensor (504) for a tailwater level (N5, N5') of the tailwater (5) and a sensor (505) for a headwater level (N3, N3') of the headwater (3),
- wherein the control device (503) acquires measured values of these sensors (504, 505),
- wherein in the case of a tailwater level (N5') which is above a limiting value (N5) the control device (503) activates a pump (203) for lowering the shaft water level if the vessel (7) approaches its lower position (S5) in the decreasing damming phase, and
wherein in the case of a headwater level (N3') which is below a limiting value (N3) the control device (503) activates a pump (203) for raising the shaft water level if the vessel (7) approaches its upper position (S5) in the increasing damming phase.

6. Method for operating a fish lift (1), wherein the fish lift (1) is embodied, in particular, according to at least one of the preceding claims, **characterized in that** measured values of a second sensor (502) are evaluated in a control device (503) as a function of whether a vessel (7)
- is located to remain in an upper position (S3)
- or is located to remain in a lower position (S5)
- or is located to rise in a lower position (S5) or to fall in an upper position (S3) or to rise or fall in an intermediate position (S35).

7. Method according to Claim 6, **characterized in that** the control device (503) is programmed in such a way that when a vessel (7) is located in the lower position (S5) and provided to remain in the lower position (S5) and there is a rising shaft water level, said control device (503) can permit at least one cleaning cycle to run by closing and opening at least one closure means (V601 - V606) and/or by mechanically cleaning at least one rake element (97) which is arranged in the fish lift (1) and/or by activating a pump (203) by which the shaft water level can be raised or lowered.

8. Method according to Claim 6, **characterized in that** the control device (503) is programmed in such a way that when there is a rising shaft water level in the increasing damming phase and a vessel (7) remains in the lower position (S5) or in an intermediate position (S35), said control device (503) opens or closes at least one closure means (V601 - V606) and/or activates a pump (203), by which the shaft water level can be raised or lowered, in such a way that the shaft water level is lowered and subsequently raised again, in order to release jamming of the vessel (7) in the shaft (6).

9. Method according to Claim 6, **characterized in that** the control device (503) is programmed in such a way that when the shaft water level is falling in the decreasing damming phase and a vessel (7) remains in the upper position (S3) or in an intermediate position (S35), said control device (503) opens or closes at least one closure means (V601 - V606) and/or activates a pump (203), by which the shaft water level can be raised or lowered, in such a way that the shaft water level is raised and subsequently lowered again, in order to release jamming of the vessel (7) in the shaft (6).

10. Method according to Claim 6, **characterized in that** the control device (503) is programmed in such a way that when a vessel (7) is located in the upper position (S3) and a vessel (7) is provided to remain in the upper position (S3) and the shaft water level is falling, said control device (503) permits at least one cleaning cycle to run by closing and opening at least one closure means (V601 - V606) and/or by mechanically cleaning at least one rake element (97) arranged in the fish lift (1) and/or by activating a pump (203) by which the shaft water level can be raised or lowered.

## Revendications

1. Ascenseur à poissons (1) destiné au transport de poissons (2) entre l'eau d'amont (3) d'un étage de retenue (4) et l'eau d'aval (5) de l'étage de retenue (4), comprenant
- un puits (6) et un récipient (7),
- le puits (6) comprenant une ouverture supérieure (8) munie d'une sortie d'écluse supérieure (9) qui se trouve au-dessous d'un niveau (N3) de l'eau d'amont (3),
- le puits (6) comprenant une ouverture inférieure (10) munie d'une entrée d'écluse inférieure (11) qui se trouve au-dessous d'un niveau (N5) de l'eau d'aval (5),
- le récipient (7) pouvant être déplacé entre une position haute (S3) et une position basse (S5) et
- le récipient (7) étant réalisé sous la forme d'un récipient flottant (59) qui adopte ses positions (S3 ; S5 ; S35) dans le puits (6) en fonction d'un niveau d'eau de puits (W22-1 ; W22-2 ; W22-3) présent dans le puits (6),
**caractérisé en ce**
- **que** l'ascenseur à poissons (1) comprend un premier capteur (501) et un deuxième capteur (502),
- la position (S3 ; S5 ; S35) correspondante du récipient (7) pouvant être détectée par le premier capteur (501) et
- le niveau d'eau de puits (W22-1 ; W22-2 ; W22-3) respectivement présent dans le puits (6) pouvant être détecté par le deuxième capteur (502).

2. Ascenseur à poissons selon la revendication 1, **caractérisé en ce que** l'ascenseur à poissons (1) comprend un dispositif de contrôle (503), le dispositif de contrôle (503) collectant les valeurs mesurées du premier capteur (501) et collectant les valeurs mesurées du deuxième capteur (502) et le dispositif de contrôle (503) interprétant les valeurs mesurées collectées et activant en conséquence et/ou désactivant en conséquence des moyens d'intervention (E601 - E607).

3. Ascenseur à poissons selon la revendication 1, **caractérisé en ce que** le premier capteur (501) est réalisé sous la forme d'un capteur sans contact et notamment sous la forme d'un capteur laser (501a) et **en ce que** deuxième capteur (502) est notamment réalisé sous la forme d'un capteur de pression (502a) ou d'un capteur laser.

4. Ascenseur à poissons selon au moins l'une des revendications 1 à 3, **caractérisé en ce que** l'ascenseur à poissons (1) comprend au moins un accès inférieur (Z601 - Z603) qui mène depuis l'eau d'aval (5) dans le puits (6) et au moins un accès supérieur (Z604 - Z606) qui mène depuis l'eau d'amont (3) dans le puits (6), l'accès inférieur (Z601 - Z603) pouvant être ouvert ou fermé par des moyens d'intervention (E601 - E603) réalisés sous la forme de moyens de fermeture inférieurs (V601 - V603) et l'accès supérieur (Z604 - Z606) pouvant être ouvert ou fermé par des moyens d'intervention (E604 - E606) réalisés sous la forme de moyens de fermeture supérieurs (V604 - V606), la position des moyens de fermeture (V604 - V606) pouvant être détectée par le dispositif de contrôle (503) par le biais de capteurs (601 - 606) et pouvant être réglée par le biais d'actionneurs (607 - 612).

5. Ascenseur à poissons selon au moins l'une des revendications 1 à 4, **caractérisé en ce**
- **que** l'ascenseur à poissons (1) comprend un capteur (504) pour un niveau d'eau d'aval (N5, N5') de l'eau d'aval (5) et un capteur (505) pour un niveau d'eau d'amont (N3, N3') de l'eau d'amont (3),
- le dispositif de contrôle (503) collectant les valeurs mesurées de ces capteurs (504, 505),
- le dispositif de contrôle (503), en présence d'un niveau d'eau d'aval (N5') supérieur à une valeur limite (N5), activant une pompe (203) pour abaisser le niveau d'eau de puits lorsque le récipient (7) gagne sa position basse (S5) dans la phase de décharge et
- le dispositif de contrôle (503), en présence d'un niveau d'eau d'amont (N3') inférieur à une valeur limite (N3), activant une pompe (203) pour élever le niveau d'eau de puits lorsque le récipient (7) gagne sa position haute (S5) dans la phase de retenue.

6. Procédé pour faire fonctionner un ascenseur à poissons (1), l'ascenseur à poissons (1) étant notamment réalisé selon au moins l'une des revendications précédentes, **caractérisé en ce que** les valeurs mesurées d'un deuxième capteur (502) sont interprétées dans un dispositif de contrôle (503) en fonction du fait qu'un récipient (7)
- soit se trouve dans une position haute (S3) pour y rester,
- soit se trouve dans une position basse (S5) pour y rester,
- soit se trouve dans la position basse (S5) en vue de monter ou dans une position haute (S3) en vue de descendre ou dans une position intermédiaire (S35) en vue de monter ou descendre.

7. Procédé selon la revendication 6, **caractérisé en ce que** le dispositif de contrôle (503) est programmé de telle sorte que celui-ci, lorsque le récipient (7) se trouve dans la position basse (S5) et est prévu pour rester dans la position basse (S5) et que le niveau d'eau de puits monte, laisse s'écouler au moins un cycle de nettoyage par une fermeture ou une ouverture d'au moins un moyen de fermeture (V601 - V603) et/ou par un nettoyage mécanique d'au moins un râteau (97) disposé dans l'ascenseur à poissons (1) et/ou par la mise en service d'une pompe (203) par le biais de laquelle le niveau d'eau de puits peut être élevé ou abaissé.

8. Procédé selon la revendication 6, **caractérisé en ce que** le dispositif de contrôle (503) est programmé de telle sorte que celui-ci, dans la phase de retenue, lorsque le niveau d'eau de puits s'élève alors que le récipient (7) demeure fermement dans la position basse (S5) ou dans une position intermédiaire (S35), ouvre ou ferme au moins un moyen de fermeture (V601 - V606) et/ou met en service d'une pompe (203) par le biais de laquelle le niveau d'eau de puits peut être élevé ou abaissé de telle sorte que le niveau d'eau de puits est abaissé et ensuite de nouveau élevé afin de libérer un mécanisme de blocage du récipient (7) dans le puits (6).

9. Procédé selon la revendication 6, **caractérisé en ce que** le dispositif de contrôle (503) est programmé de telle sorte que celui-ci, dans la phase de décharge, lorsque le niveau d'eau de puits descend alors que le récipient (7) demeure fermement dans la position haute (S3) ou dans une position intermédiaire (S35), ouvre ou ferme au moins un moyen de fermeture (V601 - V606) et/ou met en service d'une pompe (203) par le biais de laquelle le niveau d'eau de puits peut être élevé ou abaissé de telle sorte que le niveau d'eau de puits est élevé et ensuite de nouveau abaissé afin de libérer un mécanisme de blocage du récipient (7) dans le puits (6).

10. Procédé selon la revendication 6, **caractérisé en ce que** le dispositif de contrôle (503) est programmé de telle sorte que celui-ci, lorsque le récipient (7) se trouve dans la position haute (S3) et le récipient (7) est prévu pour rester dans la position haute (S3) et que le niveau d'eau de puits descend, laisse s'écouler au moins un cycle de nettoyage par une fermeture ou une ouverture d'au moins un moyen de fermeture (V601 - V603) et/ou par un nettoyage mécanique d'au moins un râteau (97) disposé dans l'ascenseur à poissons (1) et/ou par la mise en service d'une pompe (203) par le biais de laquelle le niveau d'eau de puits peut être élevé ou abaissé.
